# EUROPEAN PATENT APPLICATION

(11) **EP 4 644 516 A1**
(43) Date of publication of application: **05.11.2025**
(21) Application number: 23911657.7
(22) Date of filing: 11.12.2023
(51) Int. Cl.: C12G 3/04

(54) **BEVERAGE HAVING REDUCED UNFAVORABLE TASTE OR SMELL DERIVED FROM ALCOHOL**

(30) Priority: 28.12.2022 JP 2022211561
(71) Applicant: Suntory Holdings Limited, Osaka-shi, Osaka 530-8203 (JP)
(72) Inventor: KOZU, Saki, Kawasaki-shi, Kanagawa 211-0067 (JP); KIYOHARA, Kazuki, Soraku-gun, Kyoto 619-0284 (JP)
(74) Representative: Vossius & Partner Patentanwälte Rechtsanwälte mbB
(86) International application number: PCT/JP2023/044170
(87) International publication number: WO 2024/142876

(57) **Abstract**

The present invention addresses the problem of reducing at least one type selected from the group consisting of irritating smell, acridity, and astringency derived from the alcohol of an alcoholic beverage. In the present invention, myristicin is used.

## Description

### TECHNICAL FIELD

The present invention relates to an alcoholic beverage containing myristicin and a related method.

### BACKGROUND ART

Alcoholic beverages are often problematic in terms of the irritation and dryness of alcohol. Several methods for solving such problems are known. For example, a method of using a milk ingredient and a caramel dye in combination (PTL 1) and a method of using a particular saccharide (PTL 2) are known.

### CITATION LIST

### PATENT LITERATURE

PTL 1: Japanese Patent Laid-Open No. 2021-129517
PTL 2: Japanese Patent Laid-Open No. 2019-193602

### SUMMARY OF INVENTION

### TECHNICAL PROBLEM

Alcoholic beverages cause unfavorable taste or smell, such as, irritating smell, acridity, and astringency, derived from alcohol (ethanol) during and after drinking.

Here, the irritating smell derived from alcohol means an odor that is felt during drinking and that irritates the inside of the nasal cavity, the acridity derived from alcohol means a bitter taste that is felt after drinking, and the astringency derived from alcohol means astringency that is felt after drinking.

An object of the present invention is to provide a novel method that can reduce at least one selected from the group consisting of irritating smell, acridity, and astringency derived from alcohol in an alcoholic beverage.

### SOLUTION TO PROBLEM

The present inventors have conducted diligent studies to find that myristicin can reduce at least one selected from the group consisting of irritating smell, acridity, and astringency derived from alcohol.

The present invention relates to, but is not limited to, the following.
[1] An alcoholic beverage having a myristicin content of 20 ppb or more, an alcohol content of 30%v/v or less, a saccharide content of 4.0 g/100 ml or less, a fruit juice content of less than 8.0%w/w in terms of percent fruit juice content, and an absorbance at a wavelength of 550 nm of less than 0.68.
[2] The alcoholic beverage according to [1], wherein the myristicin content is 20 to 1000 ppb.
[3] The alcoholic beverage according to [1] or [2], having a pH in a range of 2.0 to 6.6.
[4] The beverage according to any one of [1] to [3], containing a freeze-crush-infusion liquor of a fruit and/or vegetable.
[5] A method for reducing at least one selected from the group consisting of irritating smell, acridity, and astringency derived from alcohol in an alcoholic beverage having an alcohol content of 30%v/v or less, a saccharide content of 4.0 g/100 ml or less, a fruit juice content of less than 8.0%w/w in terms of percent fruit juice content, and an absorbance at a wavelength of 550 nm of less than 0.68, wherein
   the method includes mixing raw materials so that a myristicin content in the beverage is 20 ppb or more.
[6] The method according to [5], wherein
   the step of mixing the raw material comprises:
   a step of freezing one or more of fruits and/or vegetables to obtain a frozen product;
   a step of finely crushing the frozen product to obtain a freeze-finely-crushed product;
   a step of infusing the finely-crushed product, as it is or after thawed into a paste form, in an alcohol-containing liquid to obtain an infusion liquor; and
   a step of mixing the infusion liquor with another raw material, and
   the beverage comprises the infusion liquor.

### ADVANTAGEOUS EFFECTS OF INVENTION

According to the present invention, at least one selected from the group consisting of irritating smell, acridity, and astringency derived from alcohol in an alcoholic beverage can be reduced.

### DESCRIPTION OF EMBODIMENTS

Hereinafter, a beverage of the present invention and a related method will be described.

Unless otherwise noted, "ppb" as used herein means ppb by weight/volume (w/v), which is synonymous with "µg/L."

### (Alcohol)

The beverage of the present invention is an alcoholic beverage, in other words, a beverage containing alcohol. The term "alcohol" described herein means ethanol unless otherwise noted.

The alcohol content in the beverage of the present invention is 30%v/v or less, preferably 1 to 30%v/v, more preferably 3 to 30%v/v.

The alcohol content of the beverage herein can be measured by any known method, for example, with a vibrating densitometer. Specifically, carbon dioxide is removed from the beverage by filtration or ultrasonic waves as needed to prepare a sample. The sample is subjected to steam distillation. Then, the density at 15°C of the resulting distillate is measured and converted to an alcohol content according to Table 2 "Conversion among Alcohol Content, Density (15°C) and Specific Gravity (15/15°C)" which is annexed to the Official Analysis Method of the National Tax Agency in Japan (National Tax Agency Directive No. 6 in 2007, revised on June 22, 2007). Alternatively, gas chromatography or HPLC may be used.

Alcohol may be contained in the beverage of the present invention by any means, but the beverage of the present invention typically contains an alcohol raw material and thereby contains alcohol. Examples of the alcohol raw material include, but are not particularly limited to, spirits (rum, vodka, gin, tequila, and the like), liqueurs, whiskey, brandy, or shochu, and furthermore, brewed liquors such as beer may be used. These alcohol raw materials can be used singly or in combination.

The type of the alcoholic beverage of the present invention is not particularly limited but is preferably a highball, a chuhai, a cocktail, a sour, or the like. The terms "highball" and "chuhai," when used in relation to the beverage of the present invention, refer to a beverage containing water, a distilled liquor, and carbonic acid. The highball and the chuhai may further contain a fruit juice. In addition, the term "sour," when used in relation to the beverage of the present invention, means a beverage containing a spirit, a sour juice or perfume, such as, for example, a citrus juice or perfume, and carbonic acid. The term "cocktail," when used in relation to the beverage of the present invention, means an alcoholic beverage made by mixing a fruit juice or the like with a base liquor.

When the beverage of the present invention has a relatively high alcohol content, the beverage can be diluted before drinking.

### (Myristicin)

The beverage of the present invention contains myristicin. Myristicin is a phenylpropene compound that is known to be contained in essential oils obtained from particular plants. The origin of myristicin contained in the beverage of the present invention is not limited, and, for example, the myristicin may be obtained from plants or by chemical synthesis.

The beverage of the present invention contains 20 ppb or more of myristicin and thereby reduces at least one selected from the group consisting of irritating smell, acridity, and astringency derived from alcohol. To secure the reducing effects, a high myristicin content is desirable, but when the content is too high, the spicy flavor of myristicin itself may be too noticeable. The range of the myristicin content in the beverage of the present invention is preferably 20 to 1000 ppb, more preferably 30 to 900 ppb, more preferably 40 to 800 ppb, more preferably 50 to 800 ppb, more preferably 50 to 700 ppb, more preferably 50 to 600 ppb, more preferably 60 to 600 ppb, more preferably 70 to 500 ppb, more preferably 80 to 450 ppb, more preferably 90 to 400 ppb, more preferably 100 to 400 ppb, more preferably 100 to 350 ppb.

Any of the known methods may be used for the measurement of the myristicin content in the beverage, and for example, the analysis can be conducted by gas chromatography mass spectrometry (GC/MS). An example of measurement conditions in GC/MS is as follows.

### GC/MS Conditions

Gas chromatograph: GC 8890 (manufactured by Agilent)
Mass spectrograph: MSD 5977B (manufactured by Agilent)
Column: HP-INNOWAX (manufactured by Agilent) inner diameter 0.25 mm, length 60 m, film thickness 0.5 µm
Mobile phase: He (flow rate: 1.0 mL/min constant flow rate)
Sample introduction method: FE-DHS method (Full Evaporation-Dynamic Head Space method)
Oven temperature: 40°C (3 minutes) → 4°C/minute → 230°C (14.5 minutes)
Transfer line temperature: 220°C
Ion source temperature: 230°C
Quadrupole temperature: 150°C
Mode: SIM/Scan mode
DHS (Dynamic Head Space):
   Adsorbent resin: TENAX
   Sampling Temperature: 80°C
   Nitrogen gas purge amount: 3.5 L
   Nitrogen gas purge flow rate: 100 mL/min
TDU:
   Temperature increasing condition: 30°C (0.3 minutes) → 720°C/min → 240°C (3 minutes)
   Transfer line temperature: 300°C
CIS:
   Temperature increasing condition: 20°C (0.5 minutes) → 720°C/min → 250°C (20 minutes)

### (Saccharide)

The beverage of the present invention may or may not contain a saccharide but has a low saccharide content. The term "saccharide" as used herein means a monosaccharide or disaccharide that is not a sugar alcohol, and accordingly the saccharide content in the beverage means the total content of the monosaccharide and the disaccharide. The beverage, when containing a saccharide, may contain only a monosaccharide, only a disaccharide, or a monosaccharide and a disaccharide in combination.

Examples of the monosaccharide include glucose, fructose, D-xylose, and L-arabinose. Examples of the disaccharide include sucrose and lactose.

The saccharide content in the beverage of the present invention is 4.0 g/100 ml or less, preferably 3.9 g/100 ml or less, more preferably 3.8 g/100 ml or less, more preferably 3.7 g/100 ml or less, more preferably 3.6 g/100 ml or less, more preferably 3.5 g/100 ml or less, more preferably 3.4 g/100 ml or less, more preferably 3.3 g/100 ml or less, more preferably 3.2 g/100 ml or less, more preferably 3.1 g/100 ml or less, more preferably 3.0 g/100 ml or less, more preferably 2.0 g/100 ml or less, more preferably 1.0 g/100 ml or less. The lower limit value is not particularly important but may be, for example, 0 g/ 100 ml, 0.01 g/100 ml, 0.1 g/100 ml, 0.5 g/100 ml, or 0.8 g/100 ml. Examples of the range of the preferred saccharide content include 0.01 to 4.0 g/100 ml, 0.01 to 3.4 g/100 ml, or 0.01 to 3.0 g/100 ml. At such a low saccharide content, the effects of the present invention of reducing at least one selected from the group consisting of irritating smell, acridity, and astringency derived from alcohol, are particularly remarkable.

Examples of the method for measuring the saccharide content in the beverage include, but are not particularly limited to, high-performance liquid chromatography. An example of preferred measurement conditions of the high-performance liquid chromatography is as follows.
Apparatus: SHIMADZU CORPORATION LC-20 series
Detector: UV detector (SPD-20A), RID detector (RID-20A)
Column: COSMOSIL Sugar-D 4.6 mm × 250 mm (NACALAI TESQUE, INC.)
Ingredients to be analyzed: monosaccharide, disaccharide
Mobile phase: 75% acetonitrile
Flow rate: 1.0 ml/min
Oven temperature: 30°C

### (Fruit Juice)

The beverage of the present invention may or may not contain a fruit juice, but the content of the fruit juice in the beverage is, in terms of percent fruit juice content, less than 8.0%w/w, preferably 7.0%w/w or less, preferably 6.0%w/w or less, preferably 5.0%w/w or less, preferably 4.0%w/w or less, preferably 3.0%w/w or less, preferably 2.0%w/w or less, more preferably 1.0%w/w or less. The lower limit value of the percent fruit juice content is not particularly important but may be, for example, 0%w/w, 0.01%w/w, 0.1%w/w, 0.5%w/w, or 0.8%w/w. Examples of the range of the preferred percent fruit juice content include 0.01 or more to less than 8.0%w/w, 0.01 to 7.0%w/w, 0.01 to 4.0%w/w, or 0.01 to 3.0%w/w. At such a low fruit juice content, the effects of the present invention of reducing at least one selected from the group consisting of irritating smell, acridity, and astringency derived from alcohol are particularly remarkable.

In the present invention, the "percent fruit juice content" in a beverage shall be calculated according to the conversion expression mentioned below using the amount (g) of a fruit juice added to 100 g of a sample. Further, calculation of concentration factor shall be made as per the JAS guidelines, with the proviso that the sugar refractometer index for a sugar, honey, or the like added to a fruit juice is excluded. Percent fruit juice content (%w/w) = <Amount of fruit juice added (g)> × <concentration factor>/100 mL/<density of beverage> × 100

When the beverage of the present invention contains a fruit juice, the fruit juice may be in any form such as a straight fruit juice in which a fruit juice obtained by squeezing a fruit is used as it is and a concentrated fruit juice obtained by concentrating the straight fruit juice. In addition, a transparent fruit juice and turbid fruit juice can also be used, and a whole fruit juice obtained by crushing a whole fruit that includes integuments of a fruit and removing only particularly coarse and rigid solids such as seeds, a fruit puree obtained by straining a fruit, or a fruit juice obtained by crushing or extracting the flesh of a dried fruit can also be used.

Examples of the type of fruit juice include, but not limited to, citrus juices (fruit juices of oranges such as Valencia oranges and navel orange; grapefruits such as grapefruit; flavorful acid citruses such as lemon, lime, flat lemon, sour orange, *Citrus junos, Citrus sphaerocarpa, Citrus sudachi,* citron, and fingered citron; miscellaneous citruses such as *Citrus natsudaidai, Citrus hassaku, Citrus tamurana,* sweetie, and Siranuhi; buntans such as *Citrus iyo and Citrus tankan;* tangerine oranges such as mandarin oranges, *Citrus unshiu, Citrus reticulata var poonensis,* and *Citrus kinokuni*; and kumquats such as *Citrus japonica*), apple juice, grape juice, peach juice, tropical fruit juices (pineapple juice, guava juice, banana juice, mango juice, acerola juice, lychee juice, papaya juice, passion fruit juice, and the like), fruit juices of other fruits (*Prunus mume* juice, Japanese pear juice, apricot juice, *Prunus salicina* juice, berry juice, kiwi fruit juice, and the like), strawberry juice, and melon juice. These fruit juice may be used alone or in combination of two or more. The fruit juice is preferably a fruit juice of citrus fruit, more preferably selected from the group consisting of oranges, grapefruits, and flavorful acid citruses, more preferably selected from the group consisting of orange, grapefruit, lemon, and lime.

### (Absorbance)

Myristicin is a colorless, transparent liquid at normal temperature and does not impart a strong color to beverages. In other words, the present invention does not significantly affect the inherent color of the beverage to which myristicin is to be added. As a result of utilizing this, the beverage of the present invention is colorless or light in color. This characteristic can be specified by, for example, the absorbance at a wavelength of 550 nm measured using an ultraviolet-visible spectrophotometer (UV-1600 (manufactured by SHIMADZU CORPORATION) or the like). Specifically, the absorbance of the beverage of the present invention at a wavelength of 550 nm is less than 0.68. Examples of preferred absorbance include 0.67 or less, 0.65 or less, 0.63 or less, 0.60 or less, 0.55 or less, 0.50 or less, 0.40 or less, 0.30 or less, 0.20 or less, and 0.10 or less, at a wavelength of 550 nm. The lower limit value of the absorbance is not particularly important, but the absorbance may be, for example, 0 or more, 0.01 or more, 0.02 or more, 0.05 or more, 0.07 or more, or 0.10 or more.

### (pH)

In one aspect, the pH of the alcoholic beverage of the present invention is 2.0 to 6.6, preferably 2.6 to 5.0, more preferably 3.0 to 4.5, more preferably 3.3 to 4.2. When the pH is within these ranges, the reducing effects of the present invention are good.

To adjust the pH, a pH adjuster such as malic acid, phosphoric acid, lactic acid, tartaric acid, succinic acid, gluconic acid, phytic acid, acetic acid, fumaric acid, sodium bicarbonate, sodium hydrogen carbonate, sodium citrate, potassium citrate, or potassium carbonate can be used, or the pH may be adjusted by adjusting the content of other ingredients (for example, fruit juice).

The method for measuring the pH is not particularly limited, but in order to reduce the influence of temperature, a thermostatic bath set at 25°C is preferably used for the measurement. The pH of the beverage herein means a pH measured after carbonic acid gas is removed. Accordingly, the pH can be measured after performing, for example, the step of degassing and shaking the beverage.

### (Carbonic Acid Gas)

The beverage of the present invention may contain carbonic acid gas. The carbonic acid gas can be added to the beverage by a method usually known to persons skilled in the art, and, for example, carbon dioxide may be dissolved in the beverage under pressure, carbon dioxide and the beverage may be mixed in piping using a mixer such as Carbonator from GEA Tuchenhagen GmbH, carbon dioxide may be absorbed into the beverage by spraying the beverage in a tank filled with carbon dioxide, or the beverage and soda water may be mixed, although the method is not limited to these. The carbonic acid gas pressure is adjusted by appropriately using these methods.

When the beverage of the present invention contains carbonic acid gas, the carbonic acid gas pressure is not particularly limited but is preferably 0.7 to 4.5 kgf/cm², more preferably 0.8 to 2.8 kgf/cm². In the present invention, the carbonic acid gas pressure can be measured using Gas Volume Analyzer GVA-500A manufactured by Kyoto Electronics Manufacturing Co., Ltd. For example, the sample temperature is set at 20°C, the gas in the air inside the container of the Gas Volume Analyzer is removed (snifting), shaking is performed, and then the carbonic acid gas pressure is measured. The carbonic acid gas pressure herein means a carbonic acid gas pressure at 20°C unless otherwise noted.

### (Freeze-crush-infusion liquor)

The beverage of the present invention may contain a liquor with a freeze-crush-infusion liquor of a fruit and/or vegetable. The content is not limited and is, for example, 0.1%v/v or more, or 0.1 to 1%v/v.

The freeze-crush-infusion liquor of a fruit and/or vegetable refers to an infusion liquor obtained by taking the steps of freezing at least one fruit and/or vegetable used as a source material to obtain a frozen product, finely crushing the frozen product to obtain a freeze-finely-crushed product, and infusing the finely-crushed product, as it is or after thawed into a paste form, in an alcohol-containing liquid.

Examples of the type of the fruit that is used for producing the freeze-crush-infusion liquor include, but not limited to, citrus (oranges such as Valencia oranges and navel orange; grapefruits such as grapefruit; flavorful acid citruses such as lemon, lime, flat lemon, sour orange, *Citrus junos, Citrus sphaerocarpa, Citrus sudachi,* citron, and fingered citron; miscellaneous citruses such as *Citrus natsudaidai, Citrus hassaku, Citrus tamurana,* sweetie, and Siranuhi; buntans such as *Citrus iyo* and *Citrus tankan*; tangerine oranges such as mandarin oranges, *Citrus unshiu, Citrus reticulata* var *poonensis,* and *Citrus kinokuni*; and kumquats such as *Citrus japonica*), apple, grape, peach, tropical fruit (pineapple, guava, banana, mango, acerola, lychee, papaya, passion fruit, and the like), other fruits (*Prunus mume,* Japanese pear, apricot, *Prunus salicina,* berry, kiwi fruit, and the like), strawberry, and melon. These fruits may be used alone or in combination of two or more. The fruit is preferably a citrus fruit, more preferably selected from the group consisting of oranges, grapefruits, and flavorful acid citruses, more preferably selected from the group consisting of orange, grapefruit, lemon, and lime.

The vegetables that are used for producing the freeze-crush-infusion liquor include leaf or stem vegetables, fruit vegetables (excluding those handled as fruits in the market), flower vegetables, root vegetables, pulses, edible plant seeds, except for special cases, and also includes perilla, ginger, red pepper, herbs (for example, mint, lemongrass, coriander, Italian parsley, and rosemary), wasabi, and the like. Examples of preferred vegetables include tomato, celery, carrot, parsley, spinach, watercress, green pepper, lettuce, cabbage, beet, gingers (ginger, leaf ginger), and perilla (green perilla, red perilla).

Hereinafter, the freeze-crush-infusion liquor may be described by taking fruit as an example, but such description also applies to vegetables except for special cases.

In addition, the "fruit" or "vegetable" as referred to herein with respect to a raw material refers to a whole raw fruit or vegetable including a juice and solids except for special cases, and these are distinguished from a "fruit juice" or "vegetable juice." The term "fruit juice" or "vegetable juice" as used herein refers to a juice of a fruit or vegetable obtained in advance by a step of squeezing or the like except for special cases and does not include a juice of a fruit and/or a vegetable to be contained in a final product or the like as a result of using the whole fruit and/or vegetable as a raw material.

In the freezing step, the raw material fruit and/or vegetable is frozen and solidified. The freezing machine and the freezing method that are used for freezing are not limited, and any of an air freezing method, an air blast freezing method, a contact type freezing method, a brine freezing method, and a freezing method using liquid nitrogen may be used. A preferred freezing method is a freezing method using liquid nitrogen. The temperature of liquid nitrogen is -196°C. The freezing temperature is preferably equal to or lower than the brittle temperature of the raw material fruit or vegetable to be used. The "brittle temperature" herein means a temperature where an object is rapidly embrittled (becomes brittle and easily broken) at a low temperature. The brittle temperature can be determined by applying a conventional method that is performed on a polymer or the like.

The size of the fruit and vegetable to be provided for the freezing step is not limited as long as the fruit and vegetable can be put into a freezing machine. However, it may be more appropriate to cut the fruit and vegetable into small pieces in order to freeze them in the shortest time possible, but it may be more appropriate not to cut the fruit and vegetable too much in order to freeze them without damaging them and exposing them to air as much as possible. The fruit and vegetable can be subjected to the freezing step as a whole including pericarp and seeds or may be subjected to the freezing step after inedible portions and portions including unfavorable ingredients are removed. Removal of such portions can also be performed after the freezing step. Through the freezing step, a frozen product of a fruit or vegetable can be obtained.

In the fine crushing step, the frozen product is finely crushed. The type of a crusher and the fine crushing method used for this step is not limited. It is preferred to perform fine crushing at low temperatures, preferably under frozen conditions with the use of liquid nitrogen, such that the frozen product can be kept in a solidified state. The temperature of liquid nitrogen is -196°C. The extent of fine crushing is not particularly limited. The fine crushing is performed until the finely-crushed product obtained has an average particle diameter of preferably from about 1 µm to about 1000 µm, more preferably from 1 µm to about 200 µm, still more preferably from 1 µm to about 100 µm. As referred to herein, the "average particle diameter" refers to a median diameter (a particle diameter at 50% of a cumulative oversize distribution curve; also referred to as "median size" or "50% particle size"). By taking the fine crushing step, a freeze-finely-crushed product of a fruit and/or vegetable can be obtained.

Next, the obtained freeze-finely-crushed product is subjected to an infusion step. To be specific, the freeze-finely-crushed product is infused in an alcohol-containing liquid. The freeze-finely-crushed product may be subjected, as it is or after thawed into a paste form, to an infusion step. The temperature of the infusion step is not particularly limited, unless heat is applied. Also, the period of the infusion step is not limited, and is typically in the range of from about half a day to several months, or from about 1 day to about 3 days, or said period may be several months.

The "alcohol-containing liquid" refers to an ethanol-containing liquid that is drinkable or can be used for food production, and the liquid may contain water. Typically, the alcohol-containing liquid is a mixed liquid of ethanol and water, and examples thereof include distilled liquors and brewages as mentioned above. At the infusion step, the alcohol-containing liquid is preferably a distilled liquor. The alcohol content in the alcohol-containing liquid used at the infusion step is in the range of preferably from about 15.0%v/v to about 100.0%v/v, preferably about 25.0%v/v to about 60.0%v/v.

The infusion ratio is also not limited, but is typically in the range of from about 1 g to about 500 g, from about 5 g to about 300 g, or from about 10 g to about 200 g, of the freeze-finely-crushed product per litter of the alcohol-containing liquid.

Through the infusion step, an infused liquor that is the freeze-crush-infusion liquor is obtained. The infusion liquor may be used as it is or after the solids are removed through filtration.

The freeze-crush-infusion liquor may be mixed with other materials in order to produce the beverage of the present invention.

### (Other Ingredients)

Various additives and the like may be added to the beverage of the present invention as well as usual beverages within a range where the effects of the present invention are not impaired. Examples of the various additives include acidulants, flavors, vitamins, coloring matter, antioxidants, emulsifiers, preservatives, seasonings, extracts, pH adjusters, thickeners, and quality stabilizers.

### (Packed Beverage)

The beverage of the present invention can be provided in the form of being packed in a container. The forms of containers include metal containers such as a can, PET bottles, paper packs, bottles, pouches, and the like, but are not limited thereto. For example, a sterilized and packed product can be produced through a method in which the beverage of the present invention is packed in a container and then subjected to heat sterilization such as retort sterilization, or a method in which the beverage is sterilized and then packed in a container.

### (Related Method)

In one aspect, the present invention relates to a method for reducing at least one selected from the group consisting of irritating smell, acridity, and astringency derived from alcohol in an alcoholic beverage having an alcohol content of 30%v/v or less, a saccharide content of 4.0 g/100 ml or less, a fruit juice content of less than 8.0%w/w in terms of percent fruit juice content, and an absorbance at a wavelength of 550 nm of less than 0.68. The method includes mixing raw materials so that a myristicin content in the beverage is 20 ppb or more.

Examples of the raw materials include myristicin and plant extracts containing myristicin; and water.

The type, and content of each ingredient, absorbance, pH, and the carbonic acid gas pressure in the beverage, preferred ranges thereof, and methods for adjusting them are as described above for the beverage of the present invention or are obvious therefrom. The timings are also not limited. Furthermore, specific examples and amounts of additional other ingredients are also as described above for the beverage.

For example, when the beverage contains a freeze-crush-infusion liquor of a fruit and/or vegetable, the step of mixing raw materials may include:
a step of freezing one or more of fruits and/or vegetables to obtain a frozen product;
a step of finely crushing the frozen product to obtain a freeze-finely-crushed product;
a step of infusing the finely-crushed product, as it is or after thawed into a paste form, in an alcohol-containing liquid to obtain an infusion liquor; and
a step of mixing the infusion liquor with another raw material.

### (Numerical Value Ranges)

For clarification, the numerical value ranges herein include their endpoints, i.e., the lower limit values and upper limit values.

### EXAMPLES

Hereinafter, the present invention will be described in more detail with reference to specific experimental examples, but the present invention is not limited to the following experimental examples.

The absorbance of every beverage prepared in the following experiments at a wavelength of 550 nm was within a range of 0.05 to 0.67.

### (Experiment 1) Effects of Myristicin

Neutral spirits and water were mixed to prepare a plurality of aqueous alcohol solutions having an alcohol content of 7%v/v, 15%v/v, 30%v/v, and 40%v/v respectively, and various amounts of myristicin was added thereto to prepare sample beverages. In all the sample beverages obtained, the saccharide content was 0 g/100 ml, the percent fruit juice content was 0%w/w, and the pH took a particular value within a range of 3.3 to 6.6.

Next, each sample beverage was subjected to sensory evaluations by four expert panelists according to the following criteria to determine the average values of the scores. In all the items, a higher score indicates a better result. In order to reduce individual differences in the evaluations, the panelists established common recognition on the relationship between the scores and the tastes in advance using standard products corresponding to each of the scores.

### (Irritating Smell Derived from Alcohol (EtOH))

6: Irritating smell derived from alcohol is not felt at all.
5: Irritating smell derived from alcohol is hardly felt.
4: Irritating smell derived from alcohol is weak.
3: Irritating smell derived from alcohol is somewhat felt.
2: Irritating smell derived from alcohol is felt.
1: Irritating smell derived from alcohol is strongly felt.

### (Acridity and Astringency Derived from Alcohol (EtOH))

6: Acridity and astringency derived from alcohol are not felt at all.
5: Acridity and astringency derived from alcohol are hardly felt.
4: Acridity and astringency derived from alcohol are weak.
3: Acridity and astringency derived from alcohol are somewhat felt.
2: Acridity and astringency derived from alcohol are felt.
1: Acridity and astringency derived from alcohol are strongly felt.
(Spicy Flavor Derived from Myristicin)
6: Spicy fragrance and flavor are not felt at all.
5: Spicy fragrance and flavor are hardly felt.
4: Spicy fragrance and flavor are not felt so much.
3: Spicy fragrance and flavor are slightly felt.
2: Spicy fragrance and flavor are somewhat felt.
1: Spicy fragrance and flavor are strongly felt.

These evaluation criteria and evaluation method were also used in the other experiments.

The compositional profiles and sensory evaluation results for each beverage are as shown in the following table.

**[Table 1]**

| EtOH (v/v%) | Myristicin (ppb) | 0 | 10 | 20 | 30 | 50 | 100 | 140 | 250 | 400 | 600 | 800 | 900 | 1000 | 1100 |
|---|---|---|---|---|---|---|---|---|---|---|---|---|---|---|---|
| 7% | Irritating smell of EtOH | 2.0 | 2.0 | 4.0 | 4.0 | 4.0 | 5.0 | 5.5 | 6.0 | 6.0 | 6.0 | 6.0 | 6.0 | 6.0 | 6.0 |
| | Acridity and astringency derived from EtOH | 2.0 | 2.0 | 3.5 | 4.0 | 3.5 | 4.0 | 5.0 | 6.0 | 4.5 | 4.5 | 4.5 | 4.5 | 4.0 | 4.0 |
| | Spicy flavor | 6.0 | 6.0 | 6.0 | 6.0 | 6.0 | 6.0 | 6.0 | 5.5 | 5.5 | 3.5 | 3.0 | 3.0 | 3.0 | 2.5 |
| 15% | Irritating smell of EtOH | 2.0 | 2.0 | 3.0 | 3.5 | 3.5 | 4.0 | 4.5 | 5.0 | 5.0 | 6.0 | 5.5 | 5.5 | 5.0 | 5.0 |
| | Acridity and astringency derived from EtOH | 2.0 | 2.0 | 3.0 | 3.0 | 3.5 | 4.5 | 5.0 | 6.0 | 5.5 | 5.5 | 4.0 | 4.0 | 3.5 | 3.5 |
| | Spicy flavor | 6.0 | 6.0 | 6.0 | 6.0 | 6.0 | 6.0 | 6.0 | 5.5 | 5.0 | 3.5 | 3.0 | 3.0 | 3.0 | 2.0 |
| 30% | Irritating smell of EtOH | 1.5 | 2.0 | 3.0 | 3.5 | 4.0 | 4.5 | 5.0 | 5.5 | 5.5 | 5.5 | 5.0 | 3.0 | 3.0 | 2.5 |
| | Acridity and astringency derived from EtOH | 1.5 | 2.0 | 3.0 | 3.0 | 5.0 | 5.5 | 5.5 | 5.5 | 5.0 | 4.5 | 4.0 | 4.0 | 3.5 | 3.0 |
| | Spicy flavor | 6.0 | 6.0 | 6.0 | 6.0 | 6.0 | 6.0 | 6.0 | 5.5 | 5.5 | 4.5 | 4.0 | 4.0 | 4.0 | 4.0 |
| 40% | Irritating smell of EtOH | 1.0 | 1.0 | 1.0 | 1.0 | 1.0 | 1.0 | 1.0 | 1.5 | 1.5 | 1.5 | 2.0 | 2.0 | 2.0 | 2.0 |
| | Acridity and astringency derived from EtOH | 1.0 | 1.0 | 1.0 | 1.0 | 1.0 | 1.0 | 1.0 | 1.0 | 1.0 | 1.0 | 1.5 | 2.0 | 2.0 | 2.0 |
| | Spicy flavor | 6.0 | 6.0 | 6.0 | 6.0 | 6.0 | 6.0 | 6.0 | 6.0 | 4.0 | 4.0 | 3.5 | 3.0 | 3.0 | 3.0 |
| | Overall rating | × | × | ○ | ○ | ○ | ○ | ○ | ○ | ○ | ○ | ○ | ○ | ○ | × |

As is clear from the table above, at an alcohol content in a particular range, a particular amount or more of myristicin was able to reduce at least one selected from the group consisting of irritating smell, acridity, and astringency derived from alcohol.

The table above shows "overall rating," and this is the rating of each beverage having an alcohol content within the range of the present invention (7%v/v, 15%v/v, and 30%v/v), and "○" was given to the beverages that scored three or more for all the three items of the irritating smell, the acridity/astringency, and the spicy flavor, and "×" was given to the rest. The rating of "○" was obtained in a particular myristicin content range.

### (Experiment 2) Examination of Lemon-Flavored Beverages

The same experiment as Experiment 1 was conducted after lemon-flavored beverages were prepared by further adding carbonic acid, high intensity sweetener, an acidulant, and a pH adjuster to the beverage samples. In all the beverage samples, the amounts of the carbonic acid, high-intensity sweetener, acidulant, and pH adjuster used were the same levels. In all the sample beverages obtained, the saccharide content was 0 g/100 ml, the percent fruit juice content was 0%w/w, and the pH took a particular value within a range of 3.3 to 5.0.

In the sensory evaluations, "improvement in fruitiness" was evaluated in addition to the evaluation items described in Experiment 1. The evaluation criteria are as follows.

### (Improvement in Fruitiness)

6: There is a significant improvement in fruitiness.
5: There is an improvement in fruitiness.
4: There is somewhat an improvement in fruitiness.
3: There is a slight improvement in fruitiness.
2: There is little improvement in fruitiness.
1: There is no improvement in fruitiness.

The compositional profiles and evaluation results for each beverage are shown in the following table.

**[Table 2]**

| EtOH (v/v%) | Myristicin (ppb) | 50 | 100 | 140 | 300 | 500 | 700 | 1000 |
|---|---|---|---|---|---|---|---|---|
| 7% | Improvement in fruitiness | 4.0 | 5.5 | 6.0 | 6.0 | 6.0 | 5.5 | 5.5 |
| | Irritating smell of EtOH | 4.5 | 5.5 | 6.0 | 6.0 | 6.0 | 6.0 | 6.0 |
| | Acridity and astringency derived from EtOH | 4.5 | 5.0 | 6.0 | 6.0 | 6.0 | 5.5 | 5.0 |
| | Spicy flavor | 6.0 | 6.0 | 6.0 | 6.0 | 5.5 | 4.5 | 4.0 |
| | Overall rating | ○ | ○ | ○ | ○ | ○ | ○ | ○ |

The beverages containing additional ingredients other than myristicin and the alcohol also showed the same tendency as in Experiment 1.

With respect to the "overall rating" in the table, "○" was given to the samples that scored three or more for all the three items of the irritating smell, the acridity/astringency, and the spicy flavor.

### (Experiment 3) Influence of pH

Aqueous alcohol solutions containing myristicin were prepared in the same manner as in Experiment 1, and furthermore, the pH was adjusted to obtain sample beverages. For the pH adjustment, food-grade 75% phosphoric acid (NIPPON CHEMICAL INDUSTRIAL CO., LTD.) was used. In all the sample beverages, the myristicin content was 100 ppb, the alcohol content was 7%w/w, the saccharide content was 0 g/100 ml, and the percent fruit juice content was 0%w/w.

The same sensory evaluation tests as in Experiment 1 were conducted for all the sample beverages obtained. The results are shown in the following table.

**[Table 3]**

| | | | | | | | | |
|---|---|---|---|---|---|---|---|---|
| pH | 2.0 | 2.6 | 3.0 | 3.7 | 4.0 | 4.5 | 5.0 | 6.4 |
| Irritating smell of EtOH | 5.0 | 5.0 | 6.0 | 6.0 | 6.0 | 6.0 | 5.0 | 5.0 |
| Acridity and astringency derived from EtOH | 4.0 | 5.0 | 6.0 | 6.0 | 6.0 | 5.0 | 5.0 | 4.0 |
| Spicy flavor | 6.0 | 6.0 | 6.0 | 6.0 | 6.0 | 6.0 | 6.0 | 6.0 |
| Overall rating | ○ | ○ | ○ | ○ | ○ | ○ | ○ | ○ |

With respect to the "overall rating" in the table, "○" was given to the samples that scored three or more for all the three items of the irritating smell, the acridity/astringency, and the spicy flavor, and "×" was given to the rest of the samples.

When the pH is in a particular range, particularly good results were obtained. In the pH range of 3.0 to 4.5 in particular, all the evaluation results were very favorable.

### (Experiment 4) Influence of Saccharide

First, aqueous alcohol solutions containing myristicin were prepared in the same manner as in Experiment 1, and furthermore, various amounts of a saccharide (sucrose) were added to prepare sample beverages. In all the sample beverages, the myristicin content was 100 ppb, the alcohol content was 7%v/v, the pH took a particular value within a range of 3.3 to 6.6, and the percent fruit content was 0%w/w.

Furthermore, as controls, sample beverages which were the same as the above-described sample beverages except that they did not contain myristicin were prepared.

The same sensory evaluation tests as in Experiment 1 were conducted for all the sample beverages obtained. Subsequently, from the scores of each beverage containing myristicin, the scores of the control containing a corresponding amount of the saccharide were subtracted to determine values. The values obtained show the reducing effect on at least one selected from the group consisting of irritating smell, acridity, and astringency derived from alcohol due to myristicin (it shows that the higher the value for each item or the total of the values, the higher the reducing effects). The results are shown in the following table.

**[Table 4]**

| Reducing effects | | | | | | |
|---|---|---|---|---|---|---|
| Saccharide (g/100 ml) | 1.0 | 3.0 | 4.0 | 4.2 | 4.3 | 4.5 |
| Irritating smell of EtOH | 4.0 | 3.0 | 2.5 | 1.0 | 1.0 | 0.0 |
| Acridity and astringency derived from EtOH | 3.0 | 3.5 | 2.5 | 1.5 | 1.0 | 0.5 |
| Total | 7.0 | 6.5 | 5.0 | 2.5 | 2.0 | 0.5 |

When the saccharide content was in a particular range, the reducing effects were large.

### (Experiment 5) Influence of Amount of Fruit Juice

The same experiment as in Experiment 4 was conducted except that various amounts of a fruit juice were added instead of adding the saccharide. The fruit juice used was a transparent lemon juice. Also in this experiment, from the scores of each beverage containing myristicin, the scores of the control containing a corresponding amount of the fruit juice were subtracted to determine values showing the reducing effects. In all the sample beverages other than the controls, the myristicin content was 100 ppb, the alcohol content was 7%v/v, the pH was in a range of 2.0 to 5.0, and the saccharide content was 1.0/100 ml or less. The results are shown in the following table.

**[Table 5]**

| Reducing effects | | | | | |
|---|---|---|---|---|---|
| Percent fruit juice content (%w/w) | 0 | 1.0 | 4.0 | 7.0 | 8.0 |
| Irritating smell of EtOH | 4.0 | 3.5 | 3.0 | 2.0 | 0.5 |
| Acridity and astringency derived from EtOH | 3.0 | 2.5 | 2.0 | 1.0 | 1.0 |
| Total | 7.0 | 6.0 | 5.0 | 3.0 | 1.5 |

When the fruit juice content was in a particular range, the reducing effects due to myristicin were large.

## Claims

1. An alcoholic beverage having a myristicin content of 20 ppb or more, an alcohol content of 30%v/v or less, a saccharide content of 4.0 g/100 ml or less, a fruit juice content of less than 8.0%w/w in terms of percent fruit juice content, and an absorbance at a wavelength of 550 nm of less than 0.68.

2. The alcoholic beverage according to claim 1, wherein the myristicin content is 20 to 1000 ppb.

3. The alcoholic beverage according to claim 1 or 2, having a pH in a range of 2.0 to 6.6.

4. The beverage according to any one of claims 1 to 3, comprising a freeze-crush-infusion liquor of a fruit and/or vegetable.

5. A method for reducing at least one selected from the group consisting of irritating smell, acridity, and astringency derived from alcohol in an alcoholic beverage having an alcohol content of 30%v/v or less, a saccharide content of 4.0 g/100 ml or less, a fruit juice content of less than 8.0%w/w in terms of percent fruit juice content, and an absorbance at a wavelength of 550 nm of less than 0.68, wherein
the method comprises mixing raw materials so that a myristicin content in the beverage is 20 ppb or more.

6. The method according to claim 5, wherein
the step of mixing the raw material comprises:
a step of freezing one or more of fruits and/or vegetables to obtain a frozen product;
a step of finely crushing the frozen product to obtain a freeze-finely-crushed product;
a step of infusing the finely-crushed product, as it is or after thawed into a paste form, in an alcohol-containing liquid to obtain an infusion liquor; and
a step of mixing the infusion liquor with another raw material, and
the beverage comprises the infusion liquor.
